# EUROPÄISCHE PATENTSCHRIFT

(11) **EP 3 583 314 B1**
(45) Veröffentlichungstag und Bekanntmachung des Hinweises auf die Patenterteilung: **27.11.2024**
(21) Anmeldenummer: 18770075.2
(22) Anmeldetag: 06.08.2018
(51) Int. Cl.: F03D 80/80, F03D 7/02, F03D 13/25

(54) **ELEKTRISCHE KUPPLUNG ZUR ANBINDUNG EINER WINDENERGIEANLAGE AN EIN STROMNETZ**
ELECTRICAL COUPLING FOR CONNECTING A WIND TURBINE TO AN ELECTRICITY NETWORK
COUPLAGE ÉLECTRIQUE POUR LA CONNEXION D'UNE INSTALLATION ÉOLIENNE À UN RÉSEAU ÉLECTRIQUE

(30) Priorität: 28.08.2017 DE 102017119635
(43) Veröffentlichungstag der Anmeldung: 25.12.2019
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/IB2018/055896
(87) Internationale Veröffentlichungsnummer: WO 2019/043479

(56) Entgegenhaltungen:
- WO-A2-2011/065840
- DE-A1- 102010 045 920
- GB-A- 2 526 567
- JP-A- 2009 240 021
- KR-B1- 101 368 777
- US-A1- 2011 181 127
- US-A1- 2012 202 369

## Beschreibung

Die Erfindung betrifft eine elektrische Kupplung zur Anbindung einer Windenergieanlage an ein Stromnetz. Insbesondere betrifft die Erfindung eine Kupplung zur Anbindung einer Windenergieanlage an ein Stromnetz mit einem ersten Träger mit wenigstens einem ersten elektrischen Steckverbinder, und einem zweiten Träger mit wenigstens einem komplementär zum ersten elektrischen Steckverbinder ausgebildeten zweiten elektrischen Steckverbinder, wobei der erste Träger und der zweite Träger drehbar zueinander eingerichtet sind und wenigstens einer der Steckverbinder zum Ausbilden und Trennen einer elektrischen Steckverbindung relativ zum anderen Steckverbinder verfahrbar eingerichtet.

Speziell betrifft die Erfindung eine schwimmende Windenergieanlage, die um einen im Wesentlichen drehfest angeordneten Ankerpunkt drehbar eingerichtet ist.

Aus dem Stand der Technik ist bereits eine Kupplungsvorrichtung gemäß KR 10-1368777 B1 bekannt.

Die aus der KR 10-1368777 B1 bekannte, im Turm einer Onshore-Windenergieanlage angeordnete Kupplung besteht aus zwei übereinander angeordneten, als Scheiben ausgebildeten Trägern, die zueinander drehbar eingerichtet sind und jeweils eine Mehrzahl von fest mit den Scheiben verbundenen Steckverbindern aufweisen. Die Steckverbinder der einen Scheibe bilden mit den Steckverbindern der anderen Scheibe eine Steckverbindung aus, die die in der Gondel angeordneten Anlagenkomponenten mit den im Fuß der Windenergieanlage angeordneten Anlagenkomponenten verbindet.

Bei Drehung der Gondel der Windenergieanlage werden sich nun die elektrischen Leiter, die die in der Gondel angeordneten elektrischen Komponenten mit den in der oberen Scheibe angeordneten Steckverbindern verbinden, verdrehen, sodass es beizeiten notwendig ist, diese elektrischen Leiter zu entdrehen, damit sie nicht beschädigt oder gar zerrissen werden.

Hierfür werden die Scheiben und somit die Steckverbinder durch voneinander weg bewegen der Scheiben voneinander getrennt, die obere Scheibe in eine Position gedreht, in der die elektrischen Leiter entdreht sind und die Steckverbinder der oberen und unteren Scheibe sich in der entdrehten Ausgangsposition gegenüberliegen und die Scheiben mit den Steckverbindern zur Ausbildung einer elektrischen Steckverbindung wieder zusammengeführt.

Ein Nachteil der bekannten Kupplungsvorrichtung ist, dass diese nur im Niederspannungsbereich betrieben werden kann, da ein Abheben der als Scheiben ausgebildeten Träger bei Anwendungen im Mittelspannungs- oder Hochspannungsbereich ohne weitere Anpassungen zu Anlageschäden durch Überlast oder Kurzschluss führen kann.

Nachteilig an der bekannten Kupplung ist auch, dass die Kupplung in klimatischen Gebieten mit hoher Feuchtigkeit, insbesondere bei der Verwendung von Offshore-Windenergieanlagen, nur unzureichend gegen das Eindringen von Feuchtigkeit geschützt ist. Dabei ist insbesondere hinderlich, dass die als Scheiben ausgebildeten Träger der Steckverbinder voneinander getrennt werden müssen, sodass die Abdichtung der gegeneinander beweglichen Scheiben nicht nur aufwändig wäre. Vielmehr ist damit zu rechnen, dass ein Abheben der einen Scheibe von der anderen Scheibe bei vollständiger Abdichtung durch das bei diesem Vorgang entstehende Vakuum behindert und das Eindringen von Feuchtigkeit durch die Dichtung sogar begünstigt wird.

Aufgabe der Erfindung ist es daher, eine Kupplung zu schaffen, die vor dem Eindringen von Feuchtigkeit wirkungsvoll geschützt ist und insbesondere auch im Mittelspannungs- und Hochspannungsbereich verwendet werden kann.

Diese Aufgabe wird erfindungsgemäß durch die elektrische Kupplung mit den Merkmalen von Anspruch 1 und die Windenergieanlage mit den Merkmalen von Anspruch 8 gelöst. Die Unteransprüche geben jeweils vorteilhafte Ausgestaltungen der Erfindung wieder.

Grundgedanke der Erfindung ist es, die die Steckverbinder tragenden Träger so anzuordnen, dass für das Ausbilden und Trennen der Steckverbindung nicht die Träger relativ zueinander verfahren werden müssen, sondern lediglich wenigstens einer der Steckverbinder relativ zum andern Steckverbinder. Durch diese Ausgestaltung wird eine (gemeinsame) Dichtung der Steckverbinder gegen Feuchtigkeit ermöglicht und die aus dem Stand der Technik bekannten Nachteile vermieden.

Erfindungsgemäß ist also eine elektrische Kupplung zur Anbindung einer Windenergieanlage an ein Stromnetz vorgesehen, mit einem ersten Träger mit wenigstens einem ersten elektrischen Steckverbinder, einem zweiten Träger mit wenigstens einem komplementär zum ersten elektrischen Steckverbinder ausgebildeten zweiten elektrischen Steckverbinder, wobei der erste Träger und der zweite Träger drehbar zueinander eingerichtet sind, wenigstens einer der Steckverbinder zum Ausbilden und Trennen einer elektrischen Steckverbindung relativ zum anderen Steckverbinder verfahrbar eingerichtet ist und die Steckverbinder sowohl im miteinander verbundenen Zustand als auch im voneinander getrennten Zustand gegen das Eindringen von Feuchtigkeit abgedichtet sind, wobei zusätzlich ein die Träger relativ zueinander verdrehender Drehantrieb und ein die relative Drehposition der Träger zueinander erfassender Sensor vorgesehen ist. Der Drehantrieb ist bevorzugt in der Drehachse angeordnet, wobei dessen einer Teil mit dem einen Träger und dessen anderer Teil mit dem anderen Träger verbunden ist. Dabei sorgt der Sensor für die genaue Positionierung der Steckverbinder zueinander, wobei der Sensor bevorzugt als Absolutwertgeber ausgebildet ist.

Die Träger können im einfachsten Fall als gegeneinander verdrehbare Rahmen ausgestaltet sein, an denen die Steckverbinder angeordnet sind.

Bevorzugt sind die Träger jedoch jeweils als Scheibe ausgebildet, in die die Steckverbinder eingelassen sind. Insbesondere sind die Träger als identisch ausgebildete Scheiben ausgebildet, die deckungsgleich übereinander angeordnet sind.

Alternativ ist besonders bevorzugt der Durchmesser der einen Scheibe größer ausgebildet als der Durchmesser der anderen Scheibe, wobei die größere Scheibe eine den Rand der kleineren Scheibe wenigstens teilweise umfassende Schürze ausbildet. Speziell ist in diesem seitlichen Bereich eine die beiden Träger gegeneinander abdichtende Dichtung vorgesehen, wobei die Anordnung an der Seite den Vorteil hat, dass die obere Scheibe keine Gewichtskraft auf die Dichtung ausübt und der Verschleiß der Dichtung damit relativ gering ist.

Einer der Träger ist drehbar eingerichtet, wobei die Drehachse des drehbaren Trägers bei Ausgestaltung der Träger als Scheiben zugleich im Mittelpunkt der Scheiben liegt.

Alternativ ist der eine Träger als den anderen Träger umgebender Ring ausgebildet, wobei der wenigstens eine Steckverbinder in diesem Fall in der Ebene der Träger radial verfahrbar eingerichtet ist.

Nach einer weiteren bevorzugten Ausgestaltung ist eine den Zwischenraum zwischen den Trägern gegen ein Eindringen von Feuchtigkeit schützende Dichtung vorgesehen.

Ist insbesondere eine jeweils am ersten Träger und am zweiten Träger angeordnete Mehrzahl von Steckverbindern vorgesehen, so werden diese mit einer gemeinsamen die Mehrzahl von Steckverbindern umgebenden Dichtung vor dem Eindringen von Feuchtigkeit geschützt.

Die Steckverbindung ist speziell so ausgebildet, dass der erste Steckverbinder vom zweiten Steckverbinder nur gegen die Kraft einer Feder gelöst werden kann. Die Feder stützt sich also am ersten Träger ab, wobei deren Kraft auf den ersten Steckverbinder in Richtung des zweiten Steckverbinders wirkt und die Kupplung also immer einen Zustand anstrebt, in dem die Steckverbinder miteinander verbunden sind.

Entsprechend wird auch eine Windenergieanlage beansprucht, wobei die Windenergieanlage eine um einen im Wesentlichen drehfest verankerten Ankerpunkt drehbar eingerichtete schwimmende Windenergieanlage ist und der erste Steckverbinder fest mit einem mit den stromerzeugenden elektrischen Komponenten der Windenergieanlage verbundenen elektrischen Leiter verbunden ist und der zweite Steckverbinder drehfest mit einem Seekabel verbunden ist.

Bei dieser Ausgestaltung sind es also nicht Komponenten einer Windenergieanlage, die ein Verdrehen elektrischer Leiter bewirken, sondern die schwimmende Windenergieanlage, die drehbar an einem Ankerpunkt verankert ist, als solche.

Bevorzugt weist die Windenergieanlage einen netzseitig mit dem zweiten Steckverbinder elektrisch verbundenen Hochleistungsschalter auf. Der Hochleistungsschalter kann alternativ in einer Trafostation angeordnet und damit nicht Bestandteil der Windenergieanlage sein. In jedem Fall ist aber eine Anordnung vorzusehen, bei dem der zweite Steckverbinder netzseitig mit einem Hochleistungsschalter elektrisch verbunden ist, um die Anlage und vor allem die elektrische Kupplung stromlos zu schalten. Die Windenergieanlage muss in diesem Fall mit einem eigenen Energiespeicher (und selbstverständlich auch einer eigenen Steuerung) ausgerüstet sein, damit das Entdrehen der elektrischen Leiter durch den Drehantrieb automatisiert bewirkt werden kann.

Der Ankerpunkt ist speziell als drehfest verankerte Mooring-Boje ausgebildet.

Wird eine Mooring-Boje zur mechanischen Befestigung der schwimmenden Windenergieanlage verwendet, ist wiederum bevorzugt vorgesehen, dass die Kupplung in der Mooring-Boje angeordnet ist. Die Kupplung kann aber auch außerhalb der Mooring-Boje, beispielsweise im Fundament oder einem dem Fundament Auftrieb verleihenden Schwimmer angeordnet sein.

In jedem Fall sind die Träger besonders bevorzugt im Wesentlichen horizontal ausgerichtet und um eine im Wesentlichen vertikale Achse zueinander drehbar eingerichtet.

Schließlich ist noch ein die Drehposition der Windenergieanlage relativ zur Kupplung erfassender Sensor vorgesehen, der bei Überschreiten eines vorbestimmten Drehwinkels bzw. einer vorbestimmten Anzahl von Drehungen mittels einer entsprechend vorzusehenden Steuerung das Lösen der Steckverbindung bewirkt.

Dabei ist auch eine zentrale Steuerung vorgesehen, die nicht nur das Lösen der Steckverbindung, sondern auch das Abschalten der Windenergieanlage, Betätigung des Hochleistungsschalter, Mitteilung an die Steuerwarte eines Windparks, Verdrehen des einen Trägers bis zur Ausgangsposition, Herstellen der elektrischen Verbindung, Betätigen des Hochleistungsschalters und Wiederanschalten der Anlage regelt. Diese zentrale Steuerung kann auch in der Hauptsteuerung der Anlage integriert sein, wobei vorteilhaft eine eigene Pufferbatterie vorzusehen ist.

Die Erfindung ist besonders für die von der Anmelderin entwickelten schwimmenden Windenergieanlagen geeignet, die beispielsweise im Zusammenhang mit den Druckschriften WO 2016/000681 A1 und DE 10 2016 111 332 B3 bekannt geworden sind.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine perspektivische Ansicht einer besonders bevorzugt ausgestalteten schwimmenden Windenergieanlage mit einer erfindungsgemäß ausgestalteten Kupplung;
- Fig. 2: eine geschnittene Seitenansicht einer besonders bevorzugt ausgestalteten schwimmenden Windenergieanlage mit einem besonders bevorzugt ausgestalteten Ausführungsbeispiel einer Kupplung nach der Erfindung;
- Fig. 3: eine perspektivische Ansicht der besonders bevorzugt ausgestalteten Kupplung aus Fig. 2;
- Fig. 4: eine geschnittene Seitenansicht der bevorzugt ausgestalteten Kupplung mit miteinander verbundenen Steckverbindern;
- Fig. 5: eine geschnittene Seitenansicht der bevorzugt ausgestalteten Kupplung mit voneinander getrennten Steckverbindern; und
- Fig. 6: eine geschnittene Seitenansicht der bevorzugt ausgestalteten Kupplung mit voneinander getrennten Steckverbindern und relativ zueinander verdrehten Trägern.

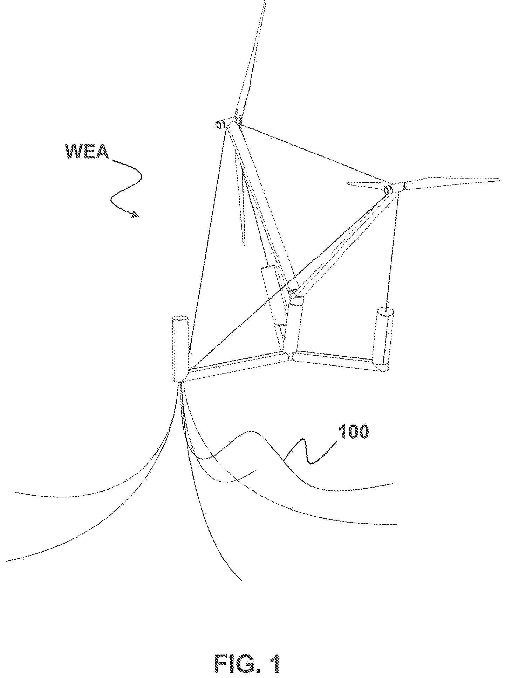

Fig. 1 zeigt eine perspektivische Ansicht einer besonders bevorzugt ausgestalteten schwimmenden Windenergieanlage, die um einen Ankerpunkt drehbar mit diesem verbunden ist und bei der die erfindungsgemäß ausgestaltete Kupplung vorteilhaft verwendet werden kann.

Insbesondere zeigt Fig. 1 eine schwimmende Windenergieanlage WEA, die mittels eines Seekabels 100 an ein Stromnetz angeschlossen ist.

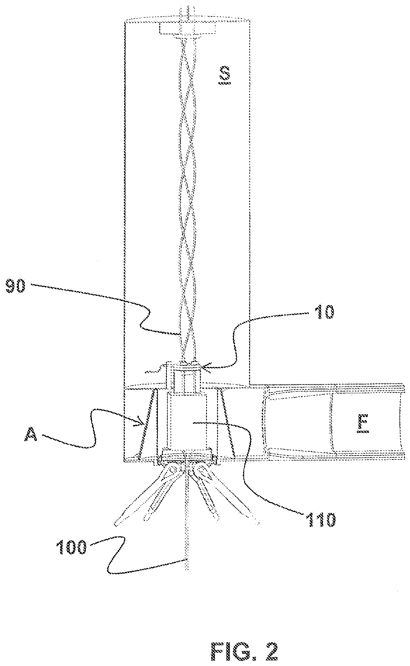

Dabei zeigt Fig. 2 eine geschnittene Seitenansicht der in Fig. 1 gezeigten Windenergieanlage WEA mit einem besonders bevorzugt ausgestalteten Ausführungsbeispiel einer Kupplung 10 nach der Erfindung.

Das in Fig.2 dargestellte Detail der schwimmenden Windenergieanlage WEA zeigt einen Querschnitt durch einen mit dem Fundament F verbundenen Schwimmer S, in dessen Bereich eine Kupplung zur Verbindung mit dem Ankerpunkt A vorgesehen ist. Der Ankerpunkt A ist insbesondere als Mooring-Boje ausgebildet, wobei die Windenergieanlage A um den Ankerpunkt drehen kann. Hierfür weist die Mooring-Boje eine fest mit dem Gewässerboden verbundene Bodenplatte auf, die in einem Lagerinnenring gelagert ist, sodass die fest mit der Wandung der Mooring-Boje verbundene Windenergieanlage WEA um die Bodenplatte drehen kann. Der Ankerpunkt A ist also in Bezug auf den Gewässergrund im Wesentlichen drehfest verankert und mit einem Seekabel 100 verbunden, über das die Windenergieanlage WEA mit einem Stromnetz verbunden ist.

Im Inneren der Mooring-Boje ist besonders bevorzugt ein die Windenergieanlage WEA mit dem Stromnetz verbindender Hochleistungsschalter 110 angeordnet, auf dem wiederum besonders bevorzugt die elektrische Kupplung 10 gemäß der Erfindung drehfest angeordnet ist, die das Seekabel 100 (mittelbar) über die Kupplung 10 mit einer Mehrzahl von elektrischen Leitern 90 verbindet, die zu den stromerzeugenden elektrischen Komponenten der Windenergieanlage WEA führen (nicht dargestellt).

Bei Drehung der Windenergieanlage WEA um den im Wesentlichen drehfesten Ankerpunkt A werden sich daher die elektrischen Leiter 90 - wie dargestellt - umeinander verdrehen und müssen wieder, wie im Folgenden erläutert werden wird, nach Erreichen eines vorgegebenen Grenzwertes entdreht werden.

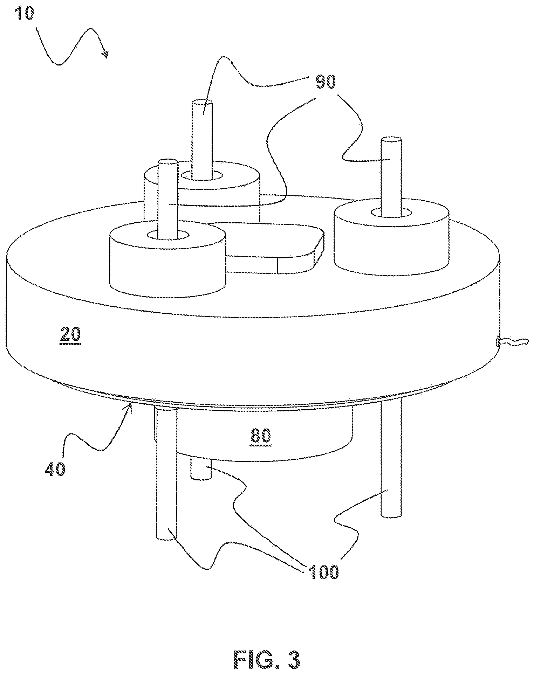

Die elektrische Kupplung 10 also solche ist einer in Fig. 3 gezeigten perspektivischen Ansicht im Detail dargestellt.

Die elektrische Kupplung 10 weist einen oberen ersten Träger 20 und einen unteren zweiten Träger 40 auf, die mittels des Drehantriebs 80 gegeneinander drehbar eingerichtet sind. Insbesondere ist der mit den Leitern des Seekabels 100 verbundene untere zweite Träger 40 drehfest mit dem Ankerpunkt A verbunden. Der obere erste Träger 20, der mit den zu den stromerzeugenden elektrischen Komponenten der Windenergieanlage WEA führenden elektrischen Leitern 90 verbunden ist, ist mittels des Drehantriebs 80 zur Entdrehung der elektrischen Leiter 90 drehbar um den ersten Träger 40 eingerichtet.

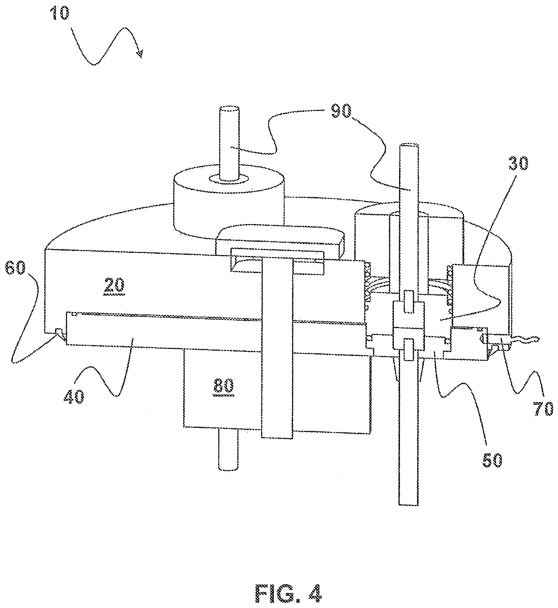

Entsprechend sind also - wie Fig. 4 zeigt - die am oberen ersten Träger 20 und die am unteren zweiten Träger 40 angeordneten Steckverbinder 30, 50 im Strom erzeugenden Betriebszustand der Windenergieanlage WEA miteinander verbunden.

Die Mehrzahl der dargestellten Steckverbinder 30, 50 ist gemeinsam über eine den oberen ersten Träger 20 gegenüber dem unteren zweiten Träger 40 abdichtende Dichtung 60 abgedichtet. Die Dichtung 60 ist dabei an einer sich am ersten Träger 20 ausgebildeten in Richtung des zweiten Trägers 40 erstreckenden, diesen umfassenden Schürze befestigt und stützt sich seitlich am Rand des zweiten Trägers 40 ab.

Der Drehantrieb 80 ist insbesondere so ausgestaltet, dass dessen einer Teil mit dem unteren zweiten Träger 40 verbunden ist, in dem eine mit dem oberen ersten Träger 20 fest verbundenen Achse drehbar gelagert ist. Durch Antrieb der Achse durch den mit dem unteren zweiten Träger 40 verbundenen Teil des Drehantriebs kann der obere erste Träger 20 relativ zum unteren zweiten Träger 40 verdreht werden. Die absolute Position der Träger 20, 40 zueinander wird durch den Positionssensor 70 erfasst. Hierfür ist insbesondere vorgesehen, dass der Sensor 70 fest mit dem oberen ersten Träger 20 verbunden und radial zum unteren zweiten Träger 40 ausgerichtet ist und der untere zweite Träger 40 eine die Drehposition des ersten Trägers 20 relativ zum zweiten Träger 40 angebende Markierung trägt, die vom Positionssensor 70 erfasst werden kann. Bei der Markierung handelt es sich beispielsweise um eine eine Absolutwerterfassung der Drehposition der Träger 20, 40 zueinander erlaubende Codierung, die ein geregeltes Anfahren der Zielposition erlaubt.

Alternativ kann auch ein ortsfest an der Windenergieanlage WEA installierter Sensor vorgesehen sein, der eine auf dem drehbaren Träger 20 angeordnete Markierung/Codierung erfasst, der die Drehposition der Kupplung 10 zur Windenergieanlage WEA bei Drehung um den Ankerpunkt A erfasst und auch ein geregeltes Anfahren beim Entdrehen der Kabel 90 ermöglicht.

Dreht sich nun die Windenergieanlage WEA um die fest mit dem Ankerpunkt A verbundene elektrische Kupplung 10, sodass die fest mit dem oberen ersten Träger 20 verbundenen Leiter 90 miteinander verdreht werden, ist ein Entdrehen der Leiter 90 notwendig. Die Drehposition der Windenergieanlage WEA im Verhältnis zur Kupplung 10 wird dabei von einem weiteren (nicht dargestellten) Sensor überwacht, der die relative Drehposition der Windenergieanlage WEA zur Kupplung 10 überwacht. Dieser Sensor entspricht der zuvor genannten Alternative für den dargestellten Sensor 70, sodass auf diesen gegebenenfalls ganz verzichtet werden kann.

Für das Entdrehen der mit dem oberen ersten Träger 20 verbundenen Leiter 90 wird die Anlage zunächst in einem ersten Schritt durch Betätigen eines netzseitig angeordneten Hochleistungsschalters 110vom Stromnetz genommen. Der Hochleistungsschalter 110 ist insbesondere in der Mooring-Boje angeordnet.

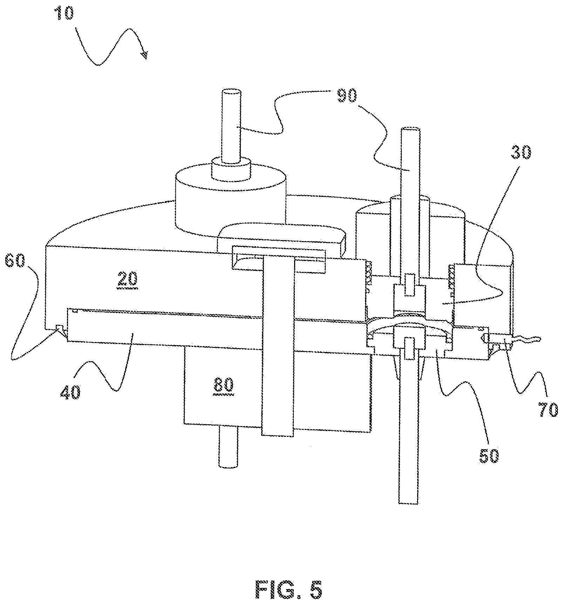

In einem zweiten Schritt werden die Steckverbinder 30, 50 voneinander getrennt. Dieses erfolgt in dem in Fig. 5 gezeigten Beispiel durch Verfahren des im oberen ersten Träger 20 angeordneten Steckverbinders 30 quer zur Ebene der Träger 20, 40. Hierfür kann ein pneumatischer, elektrischer oder elektromagnetischer Hubmechanismus vorgesehen sein. Der Hubmechanismus ist insbesondere für jeden Stecker einzeln ausgebildet sein, wobei die Einzelmechanismen durch eine gemeinsame Steuerung aufeinander abgestimmt betätigt werden. Zur Ausführung dieses Schrittes bedarf es einer in der Windenergieanlage WEA vorgesehenen eigenen Stromversorgung.

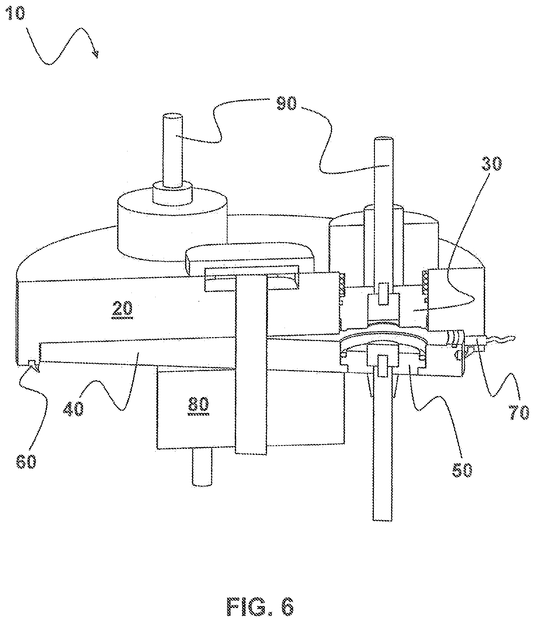

Sind die Steckverbinder 30, 50 voneinander getrennt, können der obere erste Träger 20 mittels des Drehantriebs 80 relativ zum unteren Träger 40 gedreht und somit die durch Drehung der Windenergieanlage WEA um den Ankerpunkt A verdrehten Leiter 90 wieder entdreht werden. Fig. 6 zeigt eine geschnittene Seitenansicht der bevorzugt ausgestalteten Kupplung mit voneinander getrennten Steckverbindern und relativ zueinander verdrehten Trägern 20, 40.

Nachdem die elektrischen Leiter 90 wenigstens teilweise, bevorzugt aber vollständig entdreht sind, wird mittels des Drehantriebs 80 und des Sensors 70 eine Drehposition angefahren, in der die Steckverbinder 30, 50 wieder fluchtend ausgerichtet sind und miteinander verbunden werden können.

Der Hubmechanismus der Steckverbinder ist insbesondere jeweils mit einem Endlagenschalter ausgestattet. Durch den Endlagenschalter kann überprüft werden, ob der Steckverbinder 30 jeweils eine Position eingenommen hat, in der die Steckverbinder 30, 50 voneinander getrennt sind, damit die Träger 20, 40 relativ zueinander verdreht werden können bzw. ob die Steckverbinder 30, 50 miteinander verbunden sind und die Windenergieanlage mittels des Hochleistungsschalters wieder an das Stromnetz angeschlossen werden kann. Die Steuerung der Windenergieanlage ist dabei bevorzugt so ausgestaltet, dass der Hochleistungsschalter nach dem Entdrehen der Leiter 90 nicht betätigt werden kann, wenn nicht alle Steckverbinder 30, 50 wieder miteinander verbunden sind.

Nach erfolgter Steckverbindung kann die Windenergieanlage WEA wieder ans Netz gehen.

## Patentansprüche

1. Elektrische Kupplung (10) zur Anbindung einer Windenergieanlage an ein Stromnetz mit
- einem ersten Träger (20) mit wenigstens einem ersten elektrischen Steckverbinder (30), und
- einem zweiten Träger (40) mit wenigstens einem komplementär zum ersten elektrischen Steckverbinder (30) ausgebildeten zweiten elektrischen Steckverbinder (50),
wobei
- der erste Träger (20) und der zweite Träger (40) drehbar zueinander eingerichtet sind,
- wenigstens einer der Steckverbinder (30) zum Ausbilden und Trennen einer elektrischen Steckverbindung relativ zum anderen Steckverbinder (50) verfahrbar eingerichtet ist und
- die Steckverbinder (30, 50) sowohl im miteinander verbundenen Zustand als auch im voneinander getrennten Zustand gegen das Eindringen von Feuchtigkeit abgedichtet sind,
**gekennzeichnet durch**
einen die Träger (20, 40) relativ zueinander verdrehenden Drehantrieb (80) und einen die relative Drehposition der Träger (20, 40) zueinander erfassenden Sensor (70).

2. Elektrische Kupplung (10) nach Anspruch 1, **dadurch gekennzeichnet, dass** der wenigstens eine Steckverbinder (30, 50) quer zur Ebene der Träger (20, 40) axial verfahrbar eingerichtet ist.

3. Elektrische Kupplung (10) nach Anspruch 1, **dadurch gekennzeichnet, dass** der wenigstens eine Steckverbinder (30, 50) in der Ebene der Träger (20, 40) radial verfahrbar eingerichtet ist.

4. Elektrische Kupplung (10) nach einem der Ansprüche 1 und 2, **dadurch gekennzeichnet, dass** die Träger (20, 40) jeweils als Scheibe ausgebildet sind.

5. Elektrische Kupplung (10) nach einem der vorhergehenden Ansprüche,
**gekennzeichnet durch** eine den Zwischenraum zwischen den Trägern (20, 40) gegen ein Eindringen von Feuchtigkeit schützende Dichtung (60).

6. Elektrische Kupplung (10) nach einem der vorhergehenden Ansprüche,
**gekennzeichnet durch** eine jeweils am ersten Träger (20) und am zweiten Träger (40) angeordnete Mehrzahl von Steckverbindern (30, 50) mit einer gemeinsamen die Mehrzahl von Steckverbindern (30, 50) umgebenden, die Mehrzahl von Steckverbindern (30, 50) vor Feuchtigkeit schützenden Dichtung (60).

7. Elektrische Kupplung (10) nach einem der vorhergehenden Ansprüche,
**gekennzeichnet durch** eine eine in Richtung des zweiten Steckverbinders (50) auf den ersten Steckverbinder (40) Kraft ausübende Feder.

8. Windenergieanlage (WEA) **gekennzeichnet durch** eine Kupplung (10) nach einem der vorhergehenden Ansprüche, wobei die Windenergieanlage (WEA) eine um einen im Wesentlichen drehfest verankerten Ankerpunkt (A) drehbar eingerichtete schwimmende Windenergieanlage ist und der erste Steckverbinder (30) fest mit einem mit den stromerzeugenden elektrischen Komponenten der Windenergieanlage (WEA) verbundenen elektrischen Leiter (90) verbunden ist und der zweite Steckverbinder (50) drehfest mit einem Seekabel (100) verbunden ist.

9. Windenergieanlage (WEA) nach Anspruch 8, **gekennzeichnet durch** einen netzseitig mit dem zweiten Steckverbinder (30) elektrisch verbundenen Hochleistungsschalter.

10. Windenergieanlage (WEA) nach einem der Ansprüche 8 und 9, **dadurch gekennzeichnet, dass** die Träger (20, 40) im Wesentlichen horizontal ausgerichtet und um eine im Wesentlichen vertikale Achse zueinander drehbar eingerichtet sind.

11. Windenergieanlage (WEA) nach einem der Ansprüche 8 bis 10, **gekennzeichnet durch** einen die Drehposition der Windenergieanlage (WEA) relativ zur Kupplung (10) erfassenden Sensor.

## Claims

1. Electrical coupling (10) for connecting a wind turbine to a power grid, the coupling comprising
- a first carrier (20) having at least one first electrical plug connector (30), and
- a second carrier (40) having at least one second electrical plug connector (50) that is complementary to the first electrical plug connector (30),
wherein
- the first carrier (20) and the second carrier (40) being rotatable with respect to one another,
- at least one of the plug connectors (30) is arranged to be movable relative to the other plug connector (50) to form and disconnect an electrical plug connection, and
- the connectors (30, 50) are sealed against the ingress of moisture both when they are interconnected and when they are separated,
**characterized by**
a rotary drive (80) rotating the carriers (20, 40) relative to each other and a sensor (70) detecting the relative rotational position of the carriers (20, 40) to each other.

2. Electrical coupling (10) according to claim 1, **characterised in that** the at least one plug connector (30, 50) is designed to be axially movable transversely to the plane of the carriers (20, 40).

3. Electrical coupling (10) according to claim 1, **characterised in that** the at least one plug connector (30, 50) is arranged to be radially movable in the plane of the carriers (20, 40).

4. Electric coupling (10) according to one of claims 1 and 2, **characterised in that** the carriers (20, 40) are each designed as a disc.

5. Electric coupling (10) according to one of the preceding claims, **characterised by** a seal (60) protecting the space between the carriers (20, 40) against the ingress of moisture.

6. Electrical coupling (10) according to one of the preceding claims, **characterised by** a plurality of plug connectors (30, 50) arranged respectively on the first carrier (20) and on the second carrier (40) with a common seal (60) surrounding the plurality of plug connectors (30, 50) and protecting the plurality of plug connectors (30, 50) from moisture.

7. Electrical coupling (10) according to one of the preceding claims, **characterised by** a spring exerting force on the first plug connector (40) in the direction of the second plug connector (50).

8. Wind energy converter (WEA) **characterised by** a coupling (10) according to one of the preceding claims, wherein the wind energy converter (WEA) is a floating wind energy converter arranged to rotate about an anchor point (A) anchored substantially fixed against rotation and the first plug connector (30) is firmly connected to an electrical conductor (90) connected to the current-generating electrical components of the wind energy converter (WEA) and the second plug connector (50) is connected fixed against rotation to a submarine cable (100).

9. Wind energy converter (WEA) accoring to claim 8, **characterized by** a heavy-duty circuit breaker that is connected to the second connector (30) on the grid side.

10. Wind energy converter (WEA) according to one of claims 8 and 9, **characterised in that** the carriers (20, 40) are aligned substantially horizontally and are arranged to be rotatable relative to one another about a substantially vertical axis.

11. Wind energy converter (WEA) according to one of claims 8 to 10, **characterised by** a sensor detecting the rotational position of the wind energy converter (WEA) relative to the coupling (10).

## Revendications

1. Couplage (10) électrique pour la connexion d'une éolienne à un réseau électrique comportant
- un premier support (20) comportant au moins un premier connecteur à fiches (30) électrique, et
- un second support (40) comportant au moins un second connecteur à fiches (50) électrique réalisé de manière complémentaire au premier connecteur à fiches (30) électrique,
dans lequel
- le premier support (20) et le second support (40) sont conçus de manière à pouvoir tourner l'un par rapport à l'autre,
- au moins l'un des connecteurs à fiches (30) est conçu de manière à pouvoir se déplacer par rapport à l'autre connecteur à fiches (50) pour la réalisation et la séparation d'une connexion enfichable électrique, et
- les connecteurs à fiches (30, 50) sont rendus étanches à la pénétration d'humidité, aussi bien à l'état connecté l'un à l'autre qu'à l'état déconnecté l'un de l'autre,
**caractérisé par**
un entraînement de rotation (80) faisant tourner les supports (20, 40) l'un par rapport à l'autre et un capteur (70) détectant la position de rotation relative des supports (20, 40) l'un par rapport à l'autre.

2. Couplage (10) électrique selon la revendication 1, **caractérisé en ce que** l'au moins un connecteur à fiches (30, 50) est conçu de manière à pouvoir se déplacer axialement et transversalement par rapport au plan des supports (20, 40).

3. Couplage (10) électrique selon la revendication 1, **caractérisé en ce que** l'au moins un connecteur à fiches (30, 50) est conçu de manière à pouvoir se déplacer radialement dans le plan des supports (20, 40).

4. Couplage (10) électrique selon l'une des revendications 1 et 2, **caractérisé en ce que** les supports (20, 40) sont respectivement réalisés sous forme de disque.

5. Couplage (10) électrique selon l'une des revendications précédentes, **caractérisé par** un joint d'étanchéité (60) protégeant l'espace intermédiaire entre les supports (20, 40) contre une pénétration d'humidité.

6. Couplage (10) électrique selon l'une des revendications précédentes, **caractérisé par** une pluralité de connecteurs à fiches (30, 50) disposés respectivement sur le premier support (20) et sur le second support (40), laquelle pluralité de connecteurs à fiche comporte un joint d'étanchéité (60) commun entourant la pluralité de connecteurs à fiches (30, 50) et protégeant la pluralité de connecteurs à fiches (30, 50) de l'humidité.

7. Couplage (10) électrique selon l'une des revendications précédentes, **caractérisé par** un ressort exerçant une force sur le premier connecteur à fiches (40) en direction du second connecteur à fiches (50).

8. Éolienne (WEA) **caractérisée par** un couplage (10) selon l'une des revendications précédentes, dans laquelle l'éolienne (WEA) est une éolienne flottante conçue de manière à pouvoir tourner autour d'un point d'ancrage (A) ancré de manière sensiblement solidaire en rotation, et le premier connecteur à fiches (30) est connecté de manière fixe à un conducteur électrique (90) connecté aux composants électriques générateurs d'électricité de l'éolienne (WEA) et le second connecteur à fiches (50) est connecté de manière solidaire en rotation à un câble sous-marin (100).

9. Éolienne (WEA) selon la revendication 8, **caractérisée par** un disjoncteur à haut pouvoir de coupure connecté électriquement côté réseau au second connecteur à fiches (30).

10. Éolienne (WEA) selon l'une des revendications 8 et 9, **caractérisée en ce que** les supports (20, 40) sont orientés sensiblement horizontalement et sont conçus de manière à pouvoir tourner l'un par rapport à l'autre autour d'un axe sensiblement vertical.

11. Éolienne (WEA) selon l'une des revendications 8 à 10, **caractérisée par** un capteur détectant la position de rotation de l'éolienne (WEA) par rapport au couplage (10).
